# EUROPEAN PATENT SPECIFICATION

(11) **EP 4 197 615 B1**
(45) Date of publication and mention of the grant of the patent: **18.09.2024**
(21) Application number: 21215514.7
(22) Date of filing: 17.12.2021
(51) Int. Cl.: C01B 17/02, B01D 29/05, B01D 35/18, C05D 9/00

(54) **SELF-CLEANING FILTERING DEVICE FOR FILTERING A MIXTURE OF LIQUID SULPHUR AND BENTONITE AND METHOD**
SELBSTREINIGENDE FILTERVORRICHTUNG ZUM FILTERN EINES GEMISCHS AUS FLÜSSIGEM SCHWEFEL UND BENTONIT UND VERFAHREN
DISPOSITIF DE FILTRAGE AUTONETTOYANT POUR FILTRER UN MELANGE DE SOUFRE LIQUIDE ET DE BENTONITE ET PROCEDE

(30) Priority: 15.12.2021 PL 43984421
(43) Date of publication of application: 21.06.2023
(73) Proprietor: Zaklady Chemiczne "Siarkopol" Tarnobrzeg sp. z o.o., 39-400 Tarnobrzeg (PL)
(72) Inventor: Bartman, Tomasz, 39-432 Gorzyce (PL); Milo, ukasz, 37-470 Zaklików (PL); Krawczyk, Bogus aw, 39-400 Tarnobrzeg (PL); Turbiarz, Henryk, 39-432 Gorzyce (PL)
(74) Representative: Kondrat, Mariusz

(56) References cited:
- WO-A1-2017/009709
- US-A- 4 569 859
- US-A- 5 045 200
- US-B1- 6 749 659

## Description

The object of the invention is self-cleaning filtering device, system and method for preparing a mixture of liquid sulphur with bentonite for granulation.

The invention relates to technology for preparing artificial fertilizers. Artificial fertilizers are usually supplied to customers in granulated form. A common expectation of the customers is a high quality of the fertilizer, wherein an important factor is that the additives are mixed to an extent that ensures the best possible performance of the fertilizer, namely the composition of the granules should be repeatable and homogeneous. In addition, the granules size should be repeatable.

In known methods of obtaining sulphur-containing fertilizers, bentonite and fertilizer additives are mixed with dry milled ingredients and then granulated at temperatures below the melting point of sulphur. These methods require the use of a binder to bind the individual additives together. There are also known methods of obtaining sulphur fertilizers, which involve mixing bentonite with liquid sulphur and then granulating the mixture in a drum granulator, which use the phenomenon of solidification of sulphur to form granules. The mixture of liquid sulphur and solid additives is fed by a centrifugal pump to a rotary granulator, where it is distributed at a temperature of 120-150°C by means of a system of sprinkling nozzles, which are used to spray it onto a curtain of already solidified granules. By maintaining the appropriate pre-set temperature inside the granulator, the liquid mixture solidifies on the surface of the granules. Solidification of the mixture can take place in layers on the granules in the air flowing through the granulator.

The proper course of the granulation process depends on obtaining the proper spraying of the liquid mixture, which in turn requires the use of nozzles with appropriate geometry and maintaining the proper and constant pressure of the liquid mixture in the spraying nozzles. Such a process is technologically complicated and in industrial conditions it is difficult to maintain appropriate process parameters. This is caused, for instance, by clogging of the spraying nozzles with solid additives, which are additives of the liquid mixture. These additives are milled, but this does not prevent the presence of oversized solid particles or the formation of agglomerates, i.e. oversized solid particles. It is therefore necessary to prevent such particles from entering the spraying nozzles.

A common problem encountered in the manufacture of granules is clogging of filters caused by undissolved solids suspended in liquid sulphur. Both bentonite and fertilizer additives are not dissolved in liquid sulphur and require careful grinding to form a homogeneous slurry. For this process to be practical, the mixture, which is a slurry of additives such as bentonite and fertilizer additives, must be sufficiently pourable to be pumped into and sprayed out of the granulator nozzles. Unfortunately, in such a process, especially when many additives are used, there is a problem of secondary agglomeration of the additives making it difficult or impossible to pump the mixture through the spraying nozzles. This phenomenon impedes the continuous granulation process.

Used in the sulphur industry, known liquid sulphur filtering devices require that the device should be switched off and opened to remove accumulated contaminants, after the filtration cycle has been completed. The devices are also known to operate intermittently, but do not require opening for regeneration. Regeneration is accomplished by backwashing with liquid sulphur. During backwashing the basic filtration process is interrupted. For the continuity of the main process, therefore, at least two filters are required, with the control system providing for alternating operation of the filters, with one operating and the other being regenerated.

The publication WO2020/163944 discloses a pure sulphur granulation process where a filter is used, wherein a transducer is used which monitors the pressure difference between the two sides of the filter during the process, if a large difference is detected it may indicate that the filter should be replaced or cleaned. The filter described in this publication has heating elements and operates above the melting point of sulphur, wherein this document does not disclose the construction of the filter or the method of regeneration.

Patent description US2016/0229761A1 describes a process for granulating a fertilizer based on liquid sulphur. Disclosed herein is an apparatus for preparing a slurry of a plurality of ingredients, for example, bentonite, humic acids dye fertilizer additives in liquid sulphur. The apparatus comprises a storage tank, a mixer tank with agitator, a transition /pump tank with agitator and a filter, wherein the formation of granules (pellets) is carried out on a rotoformer. The filter used has a mesh size of 140 to 400 mesh which corresponds to 0.105 to 0.037 mm, the description does not specify the method of filter regeneration. Experience has shown that it will clog very frequently, it will require regeneration and the operation of the rotoformer will be periodically interrupted.

Relevant documents are also WO2017/009709A, US4569859A and US6749659A.

Literature states that the outlet diameter of the spraying nozzles should be at least twice the diameter of the largest granules of solids contained in the slurry. However, adjusting the filter to this requirement in the case of liquid sulphur slurry with bentonite did not give satisfactory results even with the introduction of requirements concerning the grain size of the mixture additives, as technological requirements are very important, i.e. the shape of the stream of the sprayed slurry and the amount of the dispersed slurry in the granulator. The installation of a mesh filter with suitable mesh on the slurry discharge pipeline did not give satisfactory results, both for liquid sulphur and sulphur with bentonite, due to the presence of solid particles with larger dimensions and the formation of secondary agglomerates, which led to the clogging of the mesh, the system had to be stopped and cleaning of the mesh was carried out. The addition of other additives also led to a large number of interruptions in operation.

The difficulty with the mixture preparation process is that due to the specifics of the medium to be distributed (mixture of liquid sulphur and solid additives, with a temperature of over 120 °C) and the process requirements (maintaining continuity of the process, maintenance-free), it was not possible to use standard filter cartridges.

The object of the invention is self-cleaning filtering device for filtering a mixture of liquid sulphur and bentonite, comprising filter cartridge, tank having an upper section and a lower section separated by filter cartridge, heating jacket surrounding the tank, mixture inlet arranged above the filter cartridge for feeding the mixture into the upper section of the tank, wherein the axis of the inlet is arranged tangentially to the wall of the tank, mixture outlet for removing the mixture ready for granulation from the lower section of the tank arranged above the filter cartridge, an outlet for oversized particles, steam inlet for feeding steam to the heating jacket, condensate outlet for collecting condensate generated from steam, tank cover, bracket on which the filter cartridge is arranged, pressing assembly arranged on the filter cartridge, having the pressure member and pressure spring, the pressure member having pressure points on the rim of the pressure ring which is adjacent to the rim of the filter cartridge and the pressure spring being arranged between the pressure member and the tank cover.

The pressure member may be constructed of arches, however, the arches cross each other and the pressure spring rests against the pressure member at the point where the arches meet.

The pressure member may be constructed of a plurality of arches extending radially from the point where the arches connect, and the pressure spring rests against the pressure member at the point where the arches connect.

Preferably, the filter cartridge bracket is formed by an openwork wheel and a cylinder.

The mixture may comprise fertilizer additives.

The invention also provides the system for preparing a mixture of liquid sulphur with bentonite for granulation comprising a mixer of liquid sulphur and bentonite, which feeds the mixture to a pump tank, the pump tank comprising a pump section and a melting section separated by a vertical wall, wherein a flow connection is provided between the pump section and the melting section, and an agitator is arranged in the pump section, wherein the pump tank feeds the mixture to the filtering device and the melting section is connected to the outlet of the oversized particles from the filtering device, self-cleaning filtering device according to the invention, steam supply system for heating the tank of the filtering device.

Preferably, the melting section is provided with a connection to the outlet of the oversized particles formed during the granulation process.

The mixture may include fertilizer additives.

The object of the invention is a method of preparing a mixture of liquid sulphur with bentonite for granulation, by which the liquid sulphur is mixed with the bentonite in a mixer, the liquid mixture is fed from the mixer to a pump tank, the mixture is fed under pressure from the pump tank to the filtering device tank, the temperature inside the filtering device tank is controlled to be higher than the melting temperature of the sulphur, the oversized particles are separated from the filtered mixture in the filtering device tank, the filter cartridge is cleaned by creating a swirl of the mixture directly above the filter cartridge in the tank, wherein the stream flow of the mixture fed by the inlet to the tank is directed tangentially to the wall of the tank, the filtered mixture from the filtering device is fed to granulation, the separated oversized particles are fed to the melting section of the pump tank, the separated oversized particles are melted in the melting section, the mixture formed from the melted oversized particles is fed to the pump section of the pump tank.

Swirls can be produced continuously.

Preferably, the cleaning time of the filter cartridge with the mixture of sulphur and bentonite shall not be less than 5 minutes and the cleaning take place once in at least every 2 hours or more.

The mixture may comprise fertilizer additives.

Preferably, for the mixture of sulphur with bentonite comprising fertilizer additives, the cleaning time of the filter cartridge with the mixture of sulphur with bentonite and fertilizer additives shall not be less than 10 minutes, and the cleaning the cleaning take place once in at least every 1 hour.

Preferably, oversized particles formed during the granulation process are fed into the melting section of the pump tank.

The implementation of the present invention counteracts the phenomenon of blocking of the slurry spraying nozzles in the granulator. The filtering device can be regenerated, i.e. cleaned, without interrupting the operation of the granulator. It is therefore possible to use only one filtering device in a granulator installation to obtain an economical and continuous granulation process.

The use of the system according to the invention for the preparation of the slurry of bentonite and fertilizer additives in liquid sulphur facilitates continuous operation without interruptions for cleaning the filter and decontamination of the slurry spraying nozzles in the granulator. In addition, the installation is resistant to disturbances caused by secondary agglomeration of solid particles suspended in liquid sulphur, oversized particles are returned to the process, thus increasing the efficiency of the process.

The invention has been described with reference to an embodiment shown in the drawing, in which
Fig. 1 shows a diagram of the installation for the production of sulphur granules, bentonite and fertilizer additives,

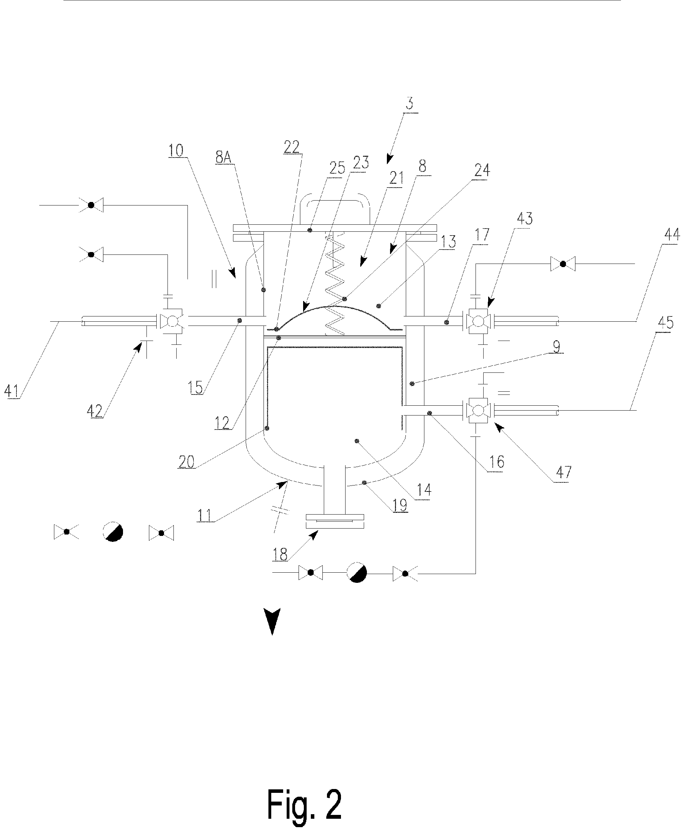

Fig. 2 shows a cross-section through the filtering device,
Fig. 3a shows a top view of the pressure member,
Fig. 3b shows a side view of the pressure member,
Fig. 4a shows a top view of the filter cartridge bracket,
Fig. 4b shows a side view of the filter cartridge bracket.

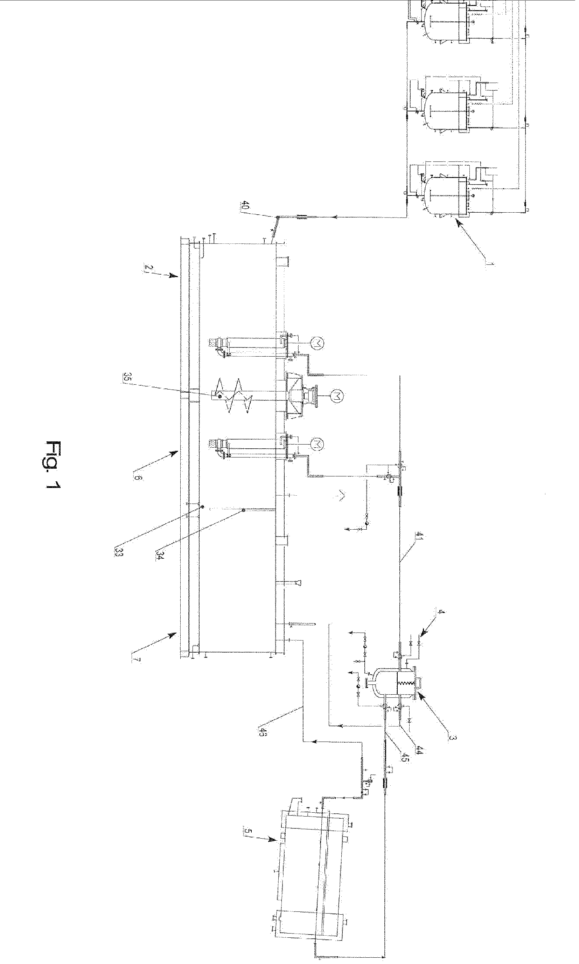

The granulation system shown in Fig. 1 comprises a mixer 1, pump tank 2, filtering device 3, steam supply system 4 and granulator 5. The pump tank 2 comprises pump section 6 and melting section 7. In the embodiment, the mixer 1 is a group of mixers whose outlets are connected to each other, wherein the mixers can operate alternately.

The filtering device 3 comprises a tank 8, which is an inner tank, and a heating jacket 9, which is an outer tank surrounding the tank 8. The heating jacket 9 is adapted to maintain a temperature in the tank 8 where the filtration of the mixture takes place. The heating jacket 9 is provided with a steam inlet 10 to the heating jacket 9 and a condensate outlet 11 from the heating jacket 9 for discharging condensate formed from the steam.

The tank 8 in the filtering device 3 is provided with a mesh in the form of a filter cartridge 12, which divides the tank 8 into an upper section 13 and a lower section 14. The filter cartridge 12 is removable. The tank 8 is provided with an inlet 15 of the mixture, which feeds the mixture into the upper section 13 of the tank 8. The tank 8 is provided with an outlet 16 of the filtered mixture from the lower section 14 of the tank 8. The inlet 15 of the mixture may be in the form of an inlet port, which is arranged in the upper section 13 above the filter cartridge 12. The outlet 16 of the filtered mixture may be in the form of an outlet port, which is arranged in the lower section below the filter cartridge 12. The tank 8 is further provided with the outlet 17 of oversized particles (agglomerates) from the upper section 13 of the tank 8. The outlet 17 of oversized particles may be in the form of a port, which is positioned above the filter cartridge 12. The tank 8 is further provided with the discharge outlet 18 in the lower section of the tank 8, the discharge outlet 18 being used to discharge the mixture from the tank 8. The discharge outlet 18 may be in the form of a discharge port, which is centrally arranged at the lowest point of the bottom 19 of the tank 8, which in cross-section has the form of half an ellipse.

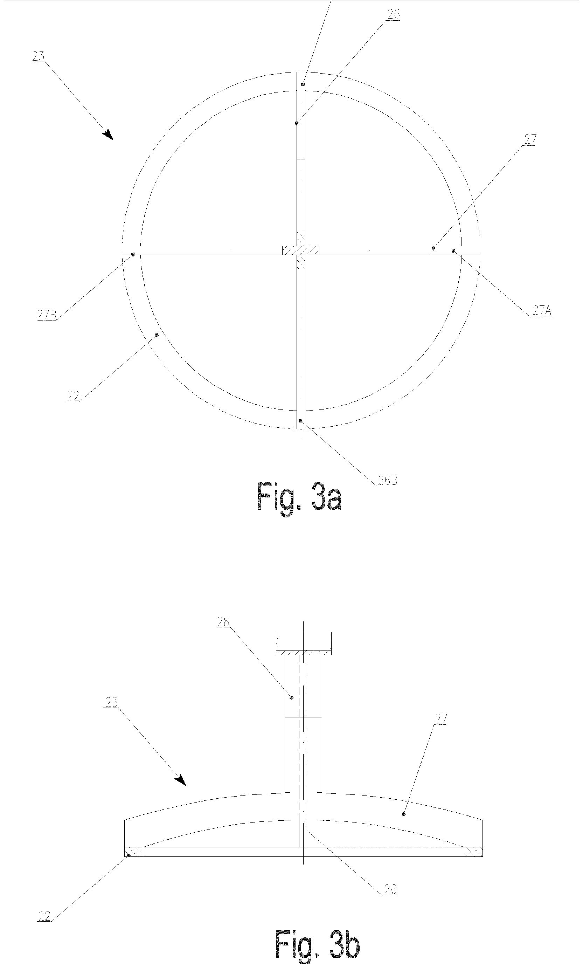

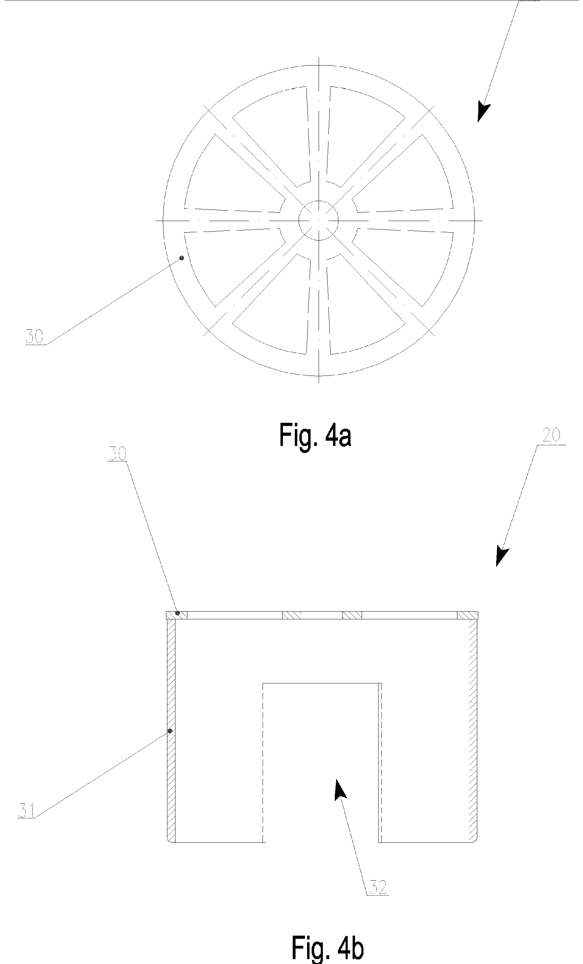

The filter cartridge 12 is a flat screen and has a circular shape. The filter cartridge is made of stainless-steel mesh with a square mesh size of 2 x 2 mm. The filter cartridge 12 is arranged on the bracket 20, wherein the filter cartridge 12 is pressed against the bracket 20 by a pressure assembly 21. The pressure assembly 21 is arranged at the top of the tank 8 above the filter cartridge 12. The pressure assembly 21 is provided with a pressure ring 22, a pressure member 23 and a spring 24. The tank 8 is closed by the cleanout cover 25, the cleanout cover 25 being provided with a flange closure. The closure of the cleanout cover 25 exerts pressure on the filter cartridge 12 by pressing the spring 24 of the pressure assembly 21. The spring 24 rests on the central section of the cleanout cover 25 and on the central section of the pressure member 23 of the pressure assembly 21. In the illustrated embodiment of the pressing assembly 21, the pressing member 23 (Figs. 3a, 3b) is in the form of a crossbar comprising two arches 26 and 27, which are connected to each other at the point of intersection of these arches, and the ends 26A, 26B, 27A, 27B of the arches 26 and 27 are resting on the pressing ring 22. The pressure member 23 exerts pressure on the pressure ring 22 at four points and, by means of the pressure ring 22, on the rim of the filter cartridge 12, the pressure member 23 may be provided with more arches and may exert pressure on the pressure ring 22 and the filter cartridge 12 at more points. At the junction point, i.e. the junction of the arches 26, 27, there is a connecting element 28 which connects the arches 26, 27 and on which the spring 24 is placed, therefore the spring 24 rests at the junction point of the arches 26, 27. The arches 26, 27 have a length similar to the diameter of the pressure ring 22. The clearance between the arches 26, 27 and the filter cartridge 12 allows a swirl to form over the filter cartridge 12 above the arches 26, 27. The pressure member 23 may be formed from a plurality of arches extending radially from the point where the arches are connected, and the pressure spring 24 may rest against the pressure member 23 at the point where the arches are connected. In this case, the arches have a length similar to the radius of the pressure ring. The bracket 20 is formed of a horizontally positioned first support element 30 in the form of an openwork wheel coupled to a second support element 31 in the form of a cylinder (Figs. 4a, 4b). The filter cartridge 12 is adjacent to the first support element 30, which is coupled to the second support element 31. The diameter of the first support element 30 for supporting the filter cartridge 12 may have a diameter in the range of 350 to 400 mm, preferably 390 mm. The openwork first support element 30 allows the filtered mixture to flow through it. The cut-out 32 allows the filtered mixture to be discharged from the lower section 14 of the tank 8 through the outlet 16.

The mixture of liquid sulphur with bentonite and other additives, fertilizer additives is fed into the interior of the filtering device 3 through the inlet 15, wherein the axis of the inlet 15 (inlet port) is directed tangentially to the wall 8A of the tank 8. The mixture is delivered through a pipeline 41, on which a pressure control valve 42 is arranged. The temperature of the fed mixture ranges from 125 to 140°C, this temperature is maintained by the heating jacket 9. The mixture flows into the tank 8 under pressure and is scattered on the surface of the filter cartridge 12, where liquid slurry is separated from oversized particles (thicker grains of bentonite or borax or possibly undissolved clumps of sulphur with bentonite and other fertilizing additives). The cleaned mixture flows out through outlet 16, where pressure is stabilized by pressure control valve 47, and the mixture flows into spraying nozzles placed in granulator 5 through the pipeline 45. The oversized particles with a certain amount of mixture are discharged through the outlet 17 of oversized particles, then they flow through the pressure control valve 43 and are supplied via the pipeline 44 to the melting section 7, the mixture formed after the melting of the particles passes through the flow connection 33 downstream the vertical separating wall 34 to the pump section 6 of the pump tank 2.

The filtering device 3 is designed to be self-cleaning. The self-cleaning of the filter cartridge 12 is achieved by creating a swirl (cyclonic movement) of the mixture in the upper section of the tank 8 above the filter cartridge 12. A cyclonic motion is created by feeding the mixture through the inlet 15 arranged tangentially to the wall 8A of the tank 8, wherein the speed of the mixture entering the filtering device is in the range of 1,5 - 2,2 m/s. Contaminants that may settle on the filter cartridge 12 are removed by the mixture flowing onto the filter cartridge 12. The resulting swirl of the mixture causes the oversized particles deposited thereon to be detached from the filter cartridge 12, and the centrifugal force causes such particles to be rejected along with the excess mixture through the outlet 17 of oversized particles. The outlet 17 of oversized particles may be constructed as an overflow port from which the mixture containing the oversized particles is discharged into the melting section 7 of the pump tank 2. In the melting section 7 the oversized particles are melted and homogenised again.

The process of preparing the mixture for granulation is initiated in the mixer 1, to which liquid sulphur, bentonite, borax and other fertilizer additives are delivered. The system for preparing the mixture for granulation is provided with at least one mixer 1, and may be provided with several mixers which operate periodically. After the mixing is completed, the prepared mixture flows from the mixer 1 via the pipeline 40 into the pumping section 6 of the pump tank 2 with the use of gravity. Then, under pressure, the mixture is fed through the pipeline 41 into the filtering device 3 tank 8. The tank 8 is heated by the heating jacket 9 to maintain a temperature higher than the melting point of the sulphur. The mixture is fed through the inlet 15 tangentially to the inner wall of the tank 8A, so that a swirl is generated which causes the oversized particles (secondary agglomerates) which have settled on the filter cartridge 12 to be detached. Due to the swirling of the mixture, the regeneration of the filter cartridge (removal of oversized particles) takes place without interrupting the feeding of the mixture to the granulator 5, the filtering of the mixture takes place independently of the swirl generation and in an uninterrupted manner. The mixture is fed to inlet 15 under pressure through valve 42, which is open during operation of the filtering device, the oversized particles together with some mixture are collected through outlet 17. Downstream the outlet 17 there is a valve 43, which can be closed during operation of the device, and during the cleaning of the filter cartridge 12 the valve 43 is opened, which increases the speed of the mixture flow and creates a swirl over the filter cartridge 12. The regeneration of the filter cartridge 12 can be carried out continuously or periodically. Continuous regeneration is carried out by partial opening of the valve 43, i.e. swirl of the mixture is generated, which is maintained during operation of the filtering device 3. Periodical regeneration is realized by periodical partial opening of said valve, i.e. mixture swirl is generated and maintained only for some time. The partial opening of the valve 43 causes a part of the mixture flow, together with oversized particles, to be directed to the melting section 7 of the pump tank 2. The time of flushing the filter cartridge with the liquid mixture in case of mixture with bentonite shall not be less than 5 minutes with frequency not less than once in every 2 hours. In the case of sulphur with bentonite and fertilizer additives, due to the parameters of the mixture and the amount of suspended solids, the flushing time shall not be less than 10 minutes with frequency of not less than once in every 1 hour.

The cleaning process of the filter cartridge 12 can be carried out both continuously, which is optimal in terms of the cleaning efficiency of the filter cartridge and the efficiency of the process, and periodically, which is made possible by the ball valve 43 mounted downstream of the outlet 17 of oversized particles. By fully opening the ball valve 42 upstream of the mixture inlet 15, the maximum flow rate of the mixture fed into the tank 8 can be achieved.

The liquid mixture, after passing through the filter cartridge 12, is fed through the outlet 16 via the pipeline 45 to the granulator 5. The mixture is fed under pressure to the granulator 5, where the mixture is sprayed and granulated.

The separated oversized particles are discharged through the outlet 17 of oversized particles. The oversized particles are fed via a pipeline 44 to the melting section 7 of the pump tank 2. The mixture formed after melting is fed via a flow connection 33 downstream of the wall 34 to the pump section 6 of the pump tank 2. The pump tank 2 is equipped with an agitator 35.

During granulation, oversized particles may be formed, which are fed to the melting section 7 of the pump tank 2 via a pipeline 46 in the same way as the particles separated in the filtering device 3.

## Claims

1. Self-cleaning filtering device for filtering a mixture of liquid sulphur and bentonite comprising
filter cartridge (12),
tank (8) having an upper section (13) and a lower section (14) separated by the filter cartridge (12),
heating jacket (9) surrounding the tank (8),
inlet (15) of the mixture arranged above the filter cartridge (12) for feeding the mixture into the upper section (13) of the tank (8), wherein the axis of the inlet (15) is arranged tangentially to the wall (8A) of the tank (8),
outlet (16) of the mixture for discharging the mixture ready for granulation from the lower section (14) of the tank (8) arranged above the filter cartridge (12),
outlet (17) of oversized particles,
steam inlet (10) for feeding the steam to the heating jacket (9),
outlet (11) of the condensate to collect the condensate produced by the steam, cover (25) of the tank (8),
bracket (20) on which the filter cartridge (12) is arranged,
pressure assembly (21) arranged on the filter cartridge (12), comprising a pressure member (23) and a pressure spring (24), wherein the pressure member (23) has pressure points on the periphery of the pressure ring (22) which is adjacent to the periphery of the filter cartridge (12), and wherein the pressure spring (24) is arranged between the pressure member (23) and the cover (25) of the tank (8).

2. Device according to claim 1, **characterised in that**, the pressure member (23) is formed by arches (26, 27), wherein the arches (26, 27) cross each other and the pressure spring (24) rests against the pressure member (23) at the connection point of the arches (26, 27).

3. Device according to claim 1, **characterised in that**, the pressure member (23) is formed by a plurality of arches extending radially from the point of connection of the arches, and the pressure spring (24) rests against the pressure member (23) at the point of connection of the arches.

4. Device according to any one of claims 1 to 3, **characterised in that**, the bracket (20) of the filter cartridge (12) is formed by an openwork wheel (30) coupled to a cylinder (31).

5. Device according to any one of claims 1 to 4, **characterised in that**, the mixture comprises fertilizer additives.

6. System of preparing a mixture of liquid sulphur with bentonite for granulation comprising
mixer (1) of liquid sulphur and bentonite, which feeds the mixture to a pump tank (2), pump tank (2), comprising a pump section (6) and a melting section (7) separated by a vertical wall (34), wherein a flow connection (33) is provided between the pump section (6) and the melting section (7), and an agitator (35) is arranged in the pump section, wherein the pump tank (2) feeds the mixture to the filtering device (3) and the melting section (7) is connected to the outlet (17) of oversized particles of the filtering device (3),
self-cleaning filtering device (3) according to any one of claims 1 to 5,
steam supply system (4) for heating the tank (8) of the filtering device (3).

7. System according to claim. 6, **characterised in that**, the melting section (7) is provided with the connection to the outlet (17) of oversized particles formed during the granulation process.

8. System according to claim 6 or 7, **characterised in that**, the mixture comprises fertilizer additives.

9. Method of preparing a mixture of liquid sulphur with bentonite for granulation, in which
- liquid sulphur with bentonite is mixed in a mixer (1),
- liquid mixture is fed from the mixer (1) into the pump tank (2),
- pressurised mixture from the pump tank (2) is fed into the filtering device (3) tank (8),
- temperature inside the tank (8) of the filtering device (3) is maintained higher than the sulphur melting temperature,
- oversized particles are separated from the filtered mixture in the filtering device (3) tank (8),
- filter cartridge (12) is cleaned by generating a swirl of the mixture directly above the filter cartridge (12) in the tank (8), wherein the stream of the mixture fed by the inlet (15) into the tank (8) is directed tangentially to the wall (8A) of the tank (8),
- the filtered mixture is fed from the filtering device (3) for granulation,
- the separated oversized particles are fed into the melting section (7) of the pump tank (2),
- the separated oversized particles are melted in the melting section (7),
- the mixture formed from the melted oversized particles is fed into the pump section (6) of the pump tank (2).

10. Method according to claim 9, **characterised in that**, the swirl is generated in a continuous manner.

11. Method according to claim 9, **characterised in that**, the cleaning time of the filter cartridge (12) with the mixture of sulphur and bentonite shall not be less than 5 minutes and the cleaning shall take place once in at least every 2 hours.

12. Method according to claim 9, **characterised in that**, the mixture comprises fertilizer additives.

13. Method according to claim 12, **characterized in that** the cleaning time of the filter cartridge (12) with the mixture of sulphur with bentonite and fertilizer additives shall not be less than 10 minutes, and the cleaning shall take place once in at least every 1 hour.

14. Method according to any one of claims 9 to 13, **characterised in that**, oversized particles formed during the granulation process are fed into the melting section (7) of the pump tank (2).

## Patentansprüche

1. Selbstreinigende Filtervorrichtung zum Filtern eines Gemisches aus flüssigem Schwefel und Bentonit mit
Filterpatrone (12),
Tank (8) mit einem oberen Bereich (13) und einem unteren Bereich (14) , die durch die Filterpatrone (12) getrennt sind,
Heizmantel (9), der den Tank (8) umgibt,
Einlass (15) für das Gemisch, der oberhalb der Filterpatrone (12) angeordnet ist, um das Gemisch in den oberen Abschnitt (13) des Tanks (8) zuzuführen, wobei die Achse des Einlasses (15) tangential zur Wand (8A) des Tanks (8) angeordnet ist,
Auslass (16) für das Gemisch zur Entnahme des granulierfähigen Gemischs aus dem unteren Teil (14) des Behälters (8), der oberhalb der Filterpatrone (12) angeordnet ist,
Auslass (17) für Überkorn,
Dampfeinlass (10) zur Zuführung des Dampfes zum Heizmantel (9),
Auslass (11) für das Kondensat zum Auffangen des vom Dampf erzeugten Kondensats,
Deckel (25) des Tanks (8),
Halterung (20), auf der die Filterpatrone (12) angeordnet ist,
Druckanordnung (21), die an der Filterpatrone (12) angeordnet ist, mit einem Druckelement (23) und einer Druckfeder (24), wobei das Druckelement (23) Druckpunkte am Umfang des Druckrings (22) aufweist, der dem Umfang der Filterpatrone (12) benachbart ist, und wobei die Druckfeder (24) zwischen dem Druckelement (23) und dem Deckel (25) des Tanks (8) angeordnet ist.

2. Vorrichtung nach Anspruch 1, **dadurch gekennzeichnet, dass** der Druckkörper (23) durch Bögen (26, 27) gebildet ist, wobei sich die Bögen (26, 27) kreuzen und die Druckfeder (24) an der Verbindungsstelle der Bögen (26, 27) am Druckkörper (23) anliegt.

3. Vorrichtung nach Anspruch 1, **dadurch gekennzeichnet, dass** das Druckelement (23) durch mehrere, sich von der Verbindungsstelle der Bögen radial erstreckende Bögen gebildet ist und die Druckfeder (24) an der Verbindungsstelle der Bögen am Druckelement (23) anliegt.

4. Vorrichtung nach einem der Ansprüche 1 bis 3, **dadurch gekennzeichnet, dass** die Halterung (20) der Filterpatrone (12) durch ein durchbrochenes Rad (30) gebildet wird, das mit einem Zylinder (31) gekoppelt ist.

5. Vorrichtung nach einem der Ansprüche 1 bis 4, **dadurch gekennzeichnet, dass** die Mischung Düngemittelzusätze enthält.

6. System zur Herstellung einer Mischung von flüssigem Schwefel mit Bentonit für die Granulierung, umfassend
Mischer (1) von Flüssigschwefel und Bentonit, der das Gemisch einem Pumpentank (2) zuführt, Pumpentank (2), bestehend aus einem Pumpenteil (6) und einem durch eine senkrechte Wand (34) getrennten Schmelzteil (7), wobei zwischen dem Pumpenteil (6) und dem Schmelzteil (7) eine Strömungsverbindung (33) vorgesehen ist und im Pumpenteil ein Rührwerk (35) angeordnet ist, wobei der Pumpentank (2) das Gemisch der Filtereinrichtung (3) zuführt und der Schmelzabschnitt (7) mit dem Auslass (17) für Überkorn der Filtereinrichtung (3) verbunden ist,
selbstreinigende Filtereinrichtung (3) nach einem der Ansprüche 1 bis 5, Dampfversorgungssystem (4) zum Beheizen des Tanks (8) der Filtereinrichtung (3).

7. System nach Anspruch. 6, **dadurch gekennzeichnet, dass** der Schmelzabschnitt (7) mit einer Verbindung zum Auslass (17) für übergroße Partikel, die während des Granulationsprozesses gebildet werden, versehen ist.

8. System nach Anspruch 6 oder 7, **dadurch gekennzeichnet, dass** die Mischung Düngemittelzusätze enthält.

9. Verfahren zur Herstellung einer Mischung von flüssigem Schwefel mit Bentonit zur Granulierung, bei dem
- Flüssiger Schwefel wird mit Bentonit in einem Mischer (1) vermischt,
- Flüssigkeitsgemisch wird vom Mischer (1) in den Pumpentank (2) geleitet,
- das unter Druck stehende Gemisch aus dem Pumpentank (2) wird in den Tank (8) der Filtervorrichtung (3) geleitet,
- die Temperatur im Inneren des Behälters (8) der Filtervorrichtung (3) wird höher gehalten als die Schwefelschmelztemperatur,
- Übergroße Partikel werden im Tank (8) der Filtervorrichtung (3) vom gefilterten Gemisch getrennt,
- Filterpatrone (12) gereinigt wird, indem ein Wirbel des Gemisches direkt über der Filterpatrone (12) im Tank (8) erzeugt wird, wobei der durch den Einlass (15) in den Tank (8) zugeführte Strom des Gemisches tangential zur Wand (8A) des Tanks (8) gerichtet ist,
- das gefilterte Gemisch wird von der Filtervorrichtung (3) zur Granulierung geleitet,
- das abgeschiedene Überkorn wird in den Schmelzbereich (7) des Pumpentanks (2) geleitet,
- die abgetrennten Überkornpartikel werden in der Schmelzsektion (7) geschmolzen,
- das aus den geschmolzenen Überkornpartikeln gebildete Gemisch wird in den Pumpenteil (6) des Pumpentanks (2) geleitet.

10. Verfahren nach Anspruch 9, **dadurch gekennzeichnet, dass** der Drall kontinuierlich erzeugt wird.

11. Verfahren nach Anspruch 9, **dadurch gekennzeichnet, dass** die Reinigungszeit der Filterpatrone (12) mit der Schwefel-Bentonit-Mischung nicht weniger als 5 Minuten betragen darf und die Reinigung mindestens einmal alle 2 Stunden erfolgen muss.

12. Verfahren nach Anspruch 9, **dadurch gekennzeichnet, dass** die Mischung Düngemittelzusätze enthält.

13. Verfahren nach Anspruch 12, **dadurch gekennzeichnet, dass** die Reinigungszeit der Filterpatrone (12) mit dem Gemisch aus Schwefel mit Bentonit und Düngemittelzusätzen nicht weniger als 10 Minuten betragen darf und die Reinigung einmal in mindestens jeder Stunde erfolgen muss.

14. Verfahren nach einem der Ansprüche 9 bis 13, **dadurch gekennzeichnet, dass** die bei der Granulierung entstehenden Überkornpartikel in den Schmelzbereich (7) des Pumpentanks (2) geleitet werden.

## Revendications

1. Dispositif de filtrage autonettoyant pour filtrer un mélange de soufre liquide et de bentonite comprenant
la cartouche filtrante (12),
réservoir (8) ayant une section supérieure (13) et une section inférieure (14) séparées par la cartouche filtrante (12),
enveloppe chauffante (9) entourant le réservoir (8),
une entrée (15) du mélange disposée au-dessus de la cartouche filtrante (12) pour alimenter le mélange dans la section supérieure (13) du réservoir (8), l'axe de l'entrée (15) étant disposé tangentiellement à la paroi (8A) du réservoir (8),
sortie (16) du mélange pour décharger le mélange prêt pour la granulation de la section inférieure (14) du réservoir (8) disposé au-dessus de la cartouche filtrante (12),
sortie (17) des particules surdimensionnées,
une entrée de vapeur (10) pour l'alimentation en vapeur de l'enveloppe de chauffage (9), sortie (11) du condensat pour collecter le condensat produit par la vapeur,
le couvercle (25) du réservoir (8),
support (20) sur lequel la cartouche filtrante (12) est disposée,
un ensemble de pression (21) disposé sur la cartouche filtrante (12), comprenant un élément de pression (23) et un ressort de pression (24), dans lequel l'élément de pression (23) a des points de pression sur la périphérie de la bague de pression (22) qui est adjacente à la périphérie de la cartouche filtrante (12), et dans lequel le ressort de pression (24) est disposé entre l'élément de pression (23) et le couvercle (25) de la cuve (8).

2. Dispositif selon la revendication 1, **caractérisé par le fait que** l'élément de pression (23) est formé par des arcs (26, 27), dans lesquels les arcs (26, 27) se croisent et le ressort de pression (24) repose contre l'élément de pression (23) au point de connexion des arcs (26, 27).

3. Dispositif selon la revendication 1, **caractérisé en ce que** l'élément de pression (23) est formé d'une pluralité d'arcs s'étendant radialement à partir du point de connexion des arcs, et le ressort de pression (24) repose contre l'élément de pression (23) au point de connexion des arcs.

4. Dispositif selon l'une quelconque des revendications 1 à 3, **caractérisé en ce que**, le support (20) de la cartouche filtrante (12) est formé par une roue ajourée (30) couplée à un cylindre (31).

5. Dispositif selon l'une des revendications 1 à 4, **caractérisé par le fait que** le mélange comprend des additifs pour engrais.

6. Système de préparation d'un mélange de soufre liquide et de bentonite pour la granulation comprenant
mélangeur (1) de soufre liquide et de bentonite, qui alimente le mélange dans un réservoir de pompage (2), réservoir de pompage (2), comprenant une section de pompage (6) et une section de fusion (7) séparées par une paroi verticale (34), dans lequel une connexion d'écoulement (33) est prévue entre la section de pompage (6) et la section de fusion (7), et un agitateur (35) est disposé dans la section de pompage, dans lequel le réservoir de la pompe (2) alimente le mélange vers le dispositif de filtrage (3) et la section de fusion (7) est reliée à la sortie (17) des particules surdimensionnées du dispositif de filtrage (3),
dispositif de filtrage autonettoyant (3) selon l'une des revendications 1 à 5, système d'alimentation en vapeur (4) pour chauffer le réservoir (8) du dispositif de filtrage (3).

7. Système selon la revendication. 6, **caractérisé par le fait que** la section de fusion (7) est pourvue d'une connexion à la sortie (17) des particules surdimensionnées formées au cours du processus de granulation.

8. Système selon la revendication 6 ou 7, **caractérisé par le fait que** le mélange comprend des additifs pour engrais.

9. Procédé de préparation d'un mélange de soufre liquide et de bentonite pour la granulation, dans lequel
- le soufre liquide et la bentonite sont mélangés dans un mélangeur (1),
- le mélange liquide est acheminé du mélangeur (1) vers le réservoir de la pompe (2),
- le mélange pressurisé provenant du réservoir de la pompe (2) est introduit dans le réservoir du dispositif de filtrage (3) (8),
- la température à l'intérieur du réservoir (8) du dispositif de filtrage (3) est maintenue à un niveau supérieur à la température de fusion du soufre,
- les particules surdimensionnées sont séparées du mélange filtré dans le réservoir (8) du dispositif de filtrage (3),
- la cartouche filtrante (12) est nettoyée en générant un tourbillon du mélange directement au-dessus de la cartouche filtrante (12) dans le réservoir (8), dans lequel le flux du mélange alimenté par l'entrée (15) dans le réservoir (8) est dirigé tangentiellement à la paroi (8A) du réservoir (8),
- le mélange filtré sort du dispositif de filtrage (3) pour être granulé,
- les particules surdimensionnées séparées sont introduites dans la section de fusion (7) du réservoir de la pompe (2),
- les particules surdimensionnées séparées sont fondues dans la section de fusion (7),
- le mélange formé par les particules surdimensionnées fondues est introduit dans la section de la pompe (6) du réservoir de la pompe (2).

10. Procédé selon la revendication 9, **caractérisé par le fait que** le tourbillon est généré de manière continue.

11. Méthode selon la revendication 9, **caractérisée par le fait que** le temps de nettoyage de la cartouche filtrante (12) avec le mélange de soufre et de bentonite ne doit pas être inférieur à 5 minutes et que le nettoyage doit avoir lieu une fois toutes les 2 heures au moins.

12. Procédé selon la revendication 9, **caractérisé par le fait que** le mélange comprend des additifs pour engrais.

13. Méthode selon la revendication 12, **caractérisée par le fait que** le temps de nettoyage de la cartouche filtrante (12) avec le mélange de soufre, de bentonite et d'additifs pour engrais ne doit pas être inférieur à 10 minutes, et que le nettoyage doit avoir lieu une fois toutes les 1 heures au moins.

14. Procédé selon l'une des revendications 9 à 13, **caractérisé par le fait que** les particules surdimensionnées formées au cours du processus de granulation sont introduites dans la section de fusion (7) du réservoir de la pompe (2).
